# EUROPÄISCHE PATENTSCHRIFT

(11) **EP 3 360 654 B1**
(45) Veröffentlichungstag und Bekanntmachung des Hinweises auf die Patenterteilung: **27.05.2020**
(21) Anmeldenummer: 18000107.5
(22) Anmeldetag: 07.02.2018
(51) Int. Cl.: B25J 13/08, B25J 15/00

(54) **GREIFVORRICHTUNG MIT INTEGRIERTEM MAGNETFELDSENSOR**
GRIPPING DEVICE WITH INTEGRATED MAGNETIC FIELD SENSOR
DISPOSITIF DE PRÉHENSION À CAPTEUR DE CHAMP MAGNÉTIQUE INTÉGRÉ

(30) Priorität: 09.02.2017 DE 102017001220
(43) Veröffentlichungstag der Anmeldung: 15.08.2018
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- EP-A1- 2 390 067
- CN-A- 101 104 267
- CN-U- 202 232 196
- JP-A- 2003 071 771

## Beschreibung

Die Erfindung betrifft eine Greifvorrichtung mit mindestens zwei, aufeinander zu- oder voneinander wegbewegbaren, auf Schlitten oder Greifelementeträgern angeordneten Greifelementen, in deren Antriebsstrang oder Lagerung sich mindestens eine Welle oder Achse befindet, deren Dreh- oder Schwenkbewegung mit der Bewegung des oder der Greifelemente zwangsgekoppelt ist.

Aus der DE 10 2015 012 779 A1 ist eine Parallelgreifvorrichtung bekannt, bei der in einem einteiligen Gehäuse als Antrieb ein Elektromotor mit drei nachgeschalteten Getrieben untergebracht ist. Bei dieser Vorrichtung sind im Gehäuse zwei Schlitten gelagert, die die Greifelemente tragen. Zur Positionserkennung der Schlittenhübe ist am Elektromotor ein Drehgeber angeordnet.

CN202232196 offenbart eine Greifvorrichtung mit zentraler Welle zur Bewegung der Greifelemente, einem Magnetfelderzeuger und Magnetsensor an einer Achse, jedoch ohne Drehwinkelerfassung.

Der vorliegenden Erfindung liegt die Problemstellung zugrunde, eine Greifvorrichtung zu entwickeln, bei der die Schlitten-, Greifelementeträger- und/oder Greifelementebewegung in Hubspannen oder Schwenkwinkelspannen messbar ist, die jeweils kleiner sind als ein Hundertstel von deren Gesamthub oder Gesamtschwenkwinkel, wobei das kostengünstige Messsytem einen minimalen Energie- und Bauraumbedarf aufweist.

Diese Problemstellung wird mit den Merkmalen des Patentanspruchs 1 gelöst. Dazu endet im Gehäuse der Greifvorrichtung eine Welle oder Achse mit einem Bauteilende, das zur Drehwinkelerfassung entweder einen Magnetfelderzeuger oder einen Magnetfeldsensor trägt, während im Gehäuse gegenüber dem Bauteilende entweder ein Magnetfeldsensor gegenüber einem bauteilendeseitigen Magnetfelderzeuger oder ein Magnetfelderzeuger gegenüber einem bauteilendeseitigen Magnetfeldsensor angeordnet ist.

Mithilfe des Magnetfelderzeugers und des Magnetfeldsensors wird die Greifvorrichtung in Kombination mit einer elektronischen Signalauswertung in die Lage versetzt, jede Schlitten- bzw. Greifelementebewegung zu messen. Die Messung erfolgt an einer Welle oder Achse, die sich am Ende des die Greifelemente antreibenden Getriebezugs befindet, also in unmittelbarer Nähe des zu greifenden Werkstückes. Dadurch können sich Spiele und andere Nachgiebigkeiten im Getriebezug kaum oder nicht auf die Wegmessung am Schlitten oder Greifelemente auswirken. Da die theoretische Auflösung des vorgestellten Wegmeßsystems im Mikrometerbereich liegt, kann die Greifvorrichtung anhand der Größe des Greifhubs auch bei hochgenauen Werkstücken feststellen, ob gegebenenfalls ein Ausschusswerkstück oder ein Falschteil aufgegriffen wurde.

Bei Parallel- oder Mehrfingergreifern können die für die Führung im Gehäuse verwendeten, die Schlitten lagernden Führungsschienen fast beliebige Querschnitte haben. Neben dem im Ausführungsbeispiel gezeigten Querschnitt sind u.a. auch rechteckige, runde, ovale und sägezahnartige Querschnitte denkbar. Die Schlitten sind ggf. quer zur Greifrichtung allseitig abstützend gelagert. Sie können z.B. auch hintereinander in nur einer Führungsschiene, -nut oder -bohrung gelagert sein. Ferner können hier - je nach Greifaufgabe - auch Führungsschienen eingesetzt werden, die z.B. tragfähig sind oder eine verschleißfeste oder reibungsarme Oberfläche aufweisen. Je nach Werkstoffwahl lassen sich diese Eigenschaften auch kombinieren.

Angetrieben werden die Schlitten - oder bei Winkelgreifern die Greifelementeträger - beispielsweise über mehrere hintereinander angeordnete Getriebe, z.B. ein Stirnradgetriebe, ein Schneckengetriebe und ein Spindel- oder Kurvengetriebe. Anstelle dieser Getriebe oder zusätzlich zu diesen können auch Schiebekeilgetriebe, Hebel-, Kulissen- oder Zugmittelgetriebe eingesetzt werden.

Wird zwischen der Welle oder Achse, an der der Drehwinkel erfasst wird, und dem Antriebsmotor ein Getriebe angeordnet, das die Rotationsbewegung des Antriebsmotors spielfrei, spielbehaftet oder elastisch überträgt, wird Spielfreiheit mit einem Umkehrspiel gleichgesetzt, das kleiner als 3 Winkelgrade ist. Eine spielbehaftete Drehmomentübertragung soll dann gegeben sein, wenn das Umkehrspiel mehr als 10 Winkelgrade misst.

Die Greifvorrichtungen können sowohl als Außen- als auch als Innengreifer verwendet werden. Des Weiteren gilt ein aufeinander Zubewegen der Greifelemente tragenden Schlitten auch für Greifelemente, deren Schlitten in nebeneinanderliegenden Schlittenführungsnuten geführt sind.

Weitere Einzelheiten der Erfindung ergeben sich aus den Unteransprüchen und der nachfolgenden Beschreibung schematisch dargestellter Ausführungsformen.
- Figur 1:: Perspektivische Ansicht einer Parallelgreifvorrichtung;
- Figur 2:: wie Figur 1, jedoch ohne Grundkörper und mit alternativer, spielbehafteter Nebenwelle;
- Figur 3:: spielbehaftete Nebenwelle aus Figur 2 um 180 Winkelgrade geschwenkt;
- Figur 4:: Perspektivische Ansicht einer Parallelgreifvorrichtung ohne Gehäuseteile;
- Figur 5:: wie Figur 4, jedoch um 180 Winkelgrade geschwenkt und ohne den vorderen Schlitten;
- Figur 6:: Mittenlängsschnitt durch die Greifvorrichtung;
- Figur 7:: Mittenquerschnitt durch die Greifvorrichtung;
- Figur 8:: Perspektivische Ansicht von der Bedienseite aus;
- Figur 9:: Perspektivische Ansicht von der Rückseite aus;
- Figur 10:: Längsschnitt der Schneckenwelle mit längsfedernder Wellenlagerung;
- Figur 11:: Perspektivische Ansicht einer Winkelgreifvorrichtung;
- Figur 12:: Querschnitt zu Figur 11 im Bereich der kleinen Sensorplatine.

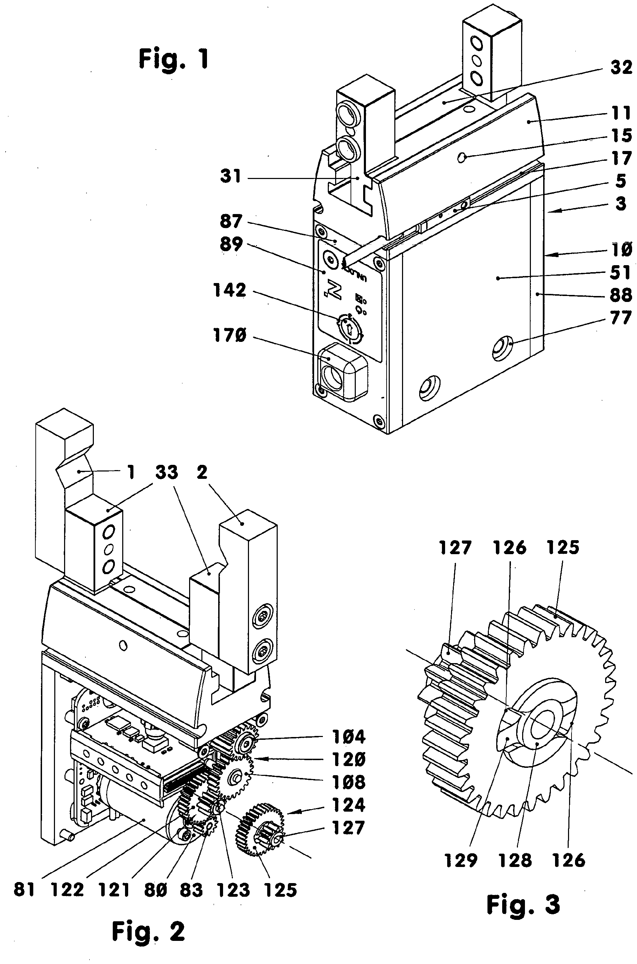

Die Figur 1 zeigt eine Parallelgreifvorrichtung (3) mit einem z.B. vierteiligen Gehäuse. Der untere Teil des Gehäuses (10) ist ein Grundkörper (51), in dessen Ausnehmungen ein Elektromotor (81), ein Stirnradgetriebe (120), ein Winkelgetriebe (100), ein Weg- oder Winkelmesssystem (130) und mehrere elektronische Baugruppen (141, 145, 146) untergebracht sind. Die beiden Stirnseiten des Grundkörpers (51) sind durch großflächige Deckel (87, 88) verschlossen. Der obere Teil des Gehäuses ist ein Führungskörper (11), in dem zwei einander kontaktierende, in entgegengesetzte Richtungen bewegbare Schlitten (31, 32) gleitgelagert sind.

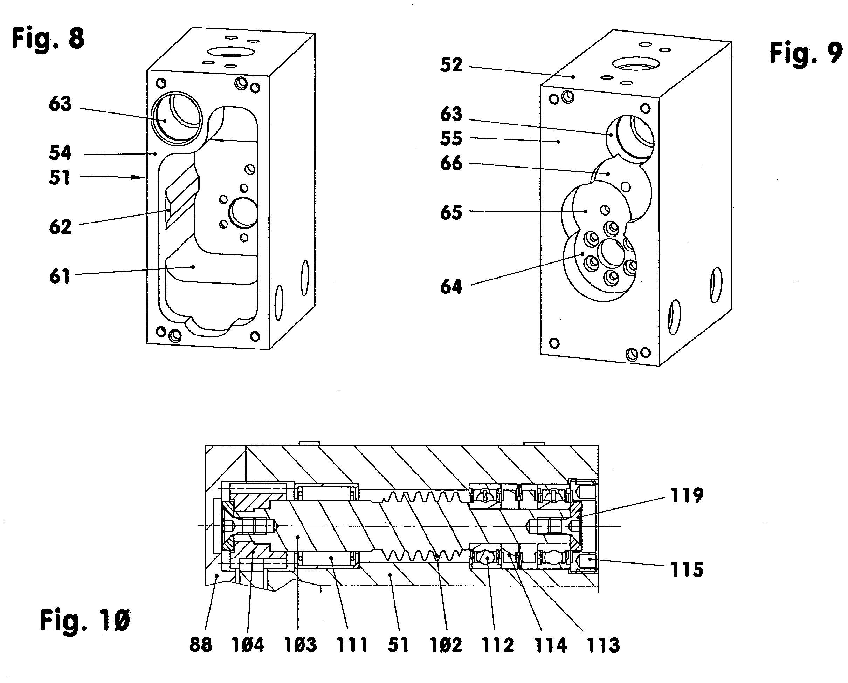

Der Grundkörper (51) ist ein quaderförmiger, beispielsweise aus einer Aluminiumlegierung hergestellter Gegenstand. Die Abmessungen des Grundkörpers (51) betragen im Ausführungsbeispiel 55 mm * 43,8 mm * 26 mm, vgl. Figuren 8 und 9. Von seiner Vorderseite aus ist in den Grundkörper (51) eine große 43,8 mm tiefe, nahezu quaderförmige Hauptausnehmung (61) eingearbeitet. Letztere dient unter anderem der Aufnahme des Antriebsmotors (81) und anderer elektronischer Baugruppen (141, 145, 146). Circa mittig weist die Hauptausnehmung (61) beidseitig je einen Stollen (62) zur Fixierung eines Teils der elektronischen Baugruppen auf.

Um den Antriebsmotor (81) lagern zu können, geht die Hauptausnehmung (61) im unteren Bereich in eine Bohrung über, die von sechs kleineren Senkbohrungen umgeben ist, vgl. Figur 9. Die Senkungen der kleineren.Senkbohrungen liegen auf der Rückseite des Grundkörpers (51).

Nach Figur 8 befindet sich links oberhalb der Hauptausnehmung (61) eine die beiden Stirnseiten des Grundkörpers (51) verbindende Wellenlagerausnehmung (63). In ihr wird die Schneckenwelle (103) des Winkelgetriebes (100) vorgespannt gelagert. Gemäß Figur 9 weist die Rückseite des Grundkörpers (51) unterhalb der Wellenlagerausnehmung (63) drei einander bereichsweise überlappende zylindrische Einsenkungen (64 - 66) auf. Die erste, untere Einsenkung ist die Antriebseinsenkung (64), in der die Senkbohrungen für die Motorhalterung angeordnet sind. Die zweite, mittlere Einsenkung ist eine Nebenwelleneinsenkung (65), in der die Nebenwelle (121) des Stirnradgetriebes (120) untergebracht ist. Zwischen dieser Einsenkung (65) und der Wellenlagerausnehmung (63) befindet sich eine Zwischenradeinsenkung (66), in der das Zwischenrad (108) des Stirnradgetriebes (120) gelagert ist.

Die rückwärtige Stirnfläche des Grundkörpers (51) wird durch einen quaderartigen, 5 mm starken, das Stirnradgetriebe (120) mitlagernden hinteren Deckel (88) verschlossen. Die Nebenwelle (121) und das Zwischenrad (108) haben beidseitig jeweils Wellenzapfen, über die sie gleitgelagert in entsprechenden Bohrungen des Grundkörpers (51) und des Deckels (88) eingreifen.

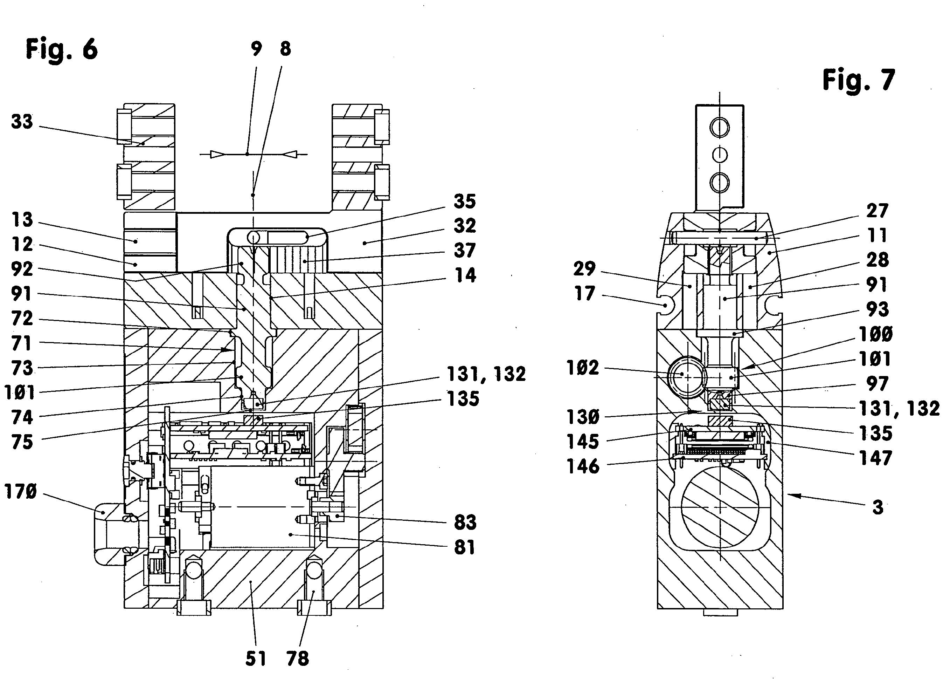

Gemäß der Figuren 8 und 9 hat der Grundkörper (51) im unteren Bereich jeweils zwei parallele Gewindedurchgangsbohrungen (77), die in beiden großen Seitenwänden jeweils in Senkungen münden. Auch die Unterseite des Grundkörpers (51) weist zwei Gewindebohrungen (78) auf, die einzeln mittig in die Gewindedurchgangsbohrungen (77) münden, vgl. Figur 6.

Die Oberseite des Grundkörpers (51) verfügt mittig über eine zentrale Stufensacklochbohrung (71), die sich unter einem gestuften Verringern ihres Durchmessers in Richtung der Hauptausnehmung (61) erstreckt und kurz vor dieser endet. Die Stufensacklochbohrung (71) hat dazu hintereinander drei Zonen, eine Axiallagerzone (72), eine Schneckenradzone (73) und eine Radiallagerzone (74). Die Radiallagerzone (74) hat, z.B. zum Schutz der in der Hauptausnehmung (61) untergebrachten Elektronik, einen planen, beispielsweise 0,5 mm dicken Boden (75), sodass zwischen der Stufensacklochbohrung (71) und der Hauptausnehmung (61) keine Verbindung besteht.

Auf der Oberseite des Grundkörpers (51) sitzt z.B. vollflächig der Führungskörper (11) auf. Im Bereich der oberen Hälfte des Führungskörpers (11) ist eine Doppelführungsnut (12) eingearbeitet, deren Länge der Länge des Führungskörpers (11) entspricht. Bei einer maximalen Breite von 15 mm hat sie eine Tiefe von 12 mm. In die Doppelführungsnut (12) ragt pro Seite, je ein Führungsstollen (13) zum Beispiel 2,5 mm tief hinein. Die Führungsstollen (13) haben oben und unten parallele, zum Beispiel 5 mm voneinander entfernt liegende Führungsflächen, die zudem in zueinander parallelen Ebenen liegen.

Mittig weist der Führungskörper (11) eine in der Verlängerung der Stufensacklochbohrung (71) des Grundkörpers (51) gelegene zentrale Durchgangsbohrung (14) auf. In ihr wird der obere Teil der Synchronisierwelle (91) ebenfalls radial gelagert. Beidseits der Durchgangsbohrung (14) befinden sich quer zur Greifrichtung (9) zwei Langlöcher (28, 29), vgl. Figur 7. In der Unterseite des Führungskörpers (11) befinden sich beidseits der Durchgangsbohrung (14) vier kleinere Bohrungen. Die beiden der Durchgangsbohrung (14) nächstgelegenen Bohrungen nehmen die Befestigungsschrauben (23) auf, mit denen der Führungskörper (11) am Grundkörper (51) verschraubt wird. Die beiden anderen, weiter entfernt liegenden Bohrungen, dienen der Aufnahme von Passstiften (24).

Nach den Figuren 6 und 7 weist der Führungskörper (11) im oberen Drittel und in Längsrichtung mittig eine Querbohrung (15) auf, die einen Haltestift (27) als Hubanschlag für die Schlitten (31, 32) führungskörperseitig fixiert lagert.

In jeder großen, konvex gewölbten Seitenwandung des Führungskörpers (11) ist im unteren Bereich, also in der Nähe des Grundkörpers (51), jeweils eine Messmittelnut (17) angeordnet, die zum Beispiel zur Aufnahme eines Magnetfeldsensors (5) dienen kann. Beide Messmittelnuten (17) sind z.B. parallel zur Greifrichtung (9) orientiert.

An der Rückseite der Hauptausnehmung (61) ist der Elektromotor (81) derart befestigt, dass das auf seiner Welle sitzende Antriebsrad (83) in den zwischen dem hinteren Deckel (88) und dem Grundkörper (51) gelegenen Zwischenraum hineinragt, vgl. Figur 6. Das Antriebsrad (83) treibt die Nebenwelle (121) über deren großes Nebenwellenrad (122) an. An dem großen Nebenwellenrad (122) ist ein kleines Nebenwellenrad (123) angeformt, das mit dem in der Zwischenradeinsenkung (66) angeordneten Zwischenrad (108) kämmt, vgl. Figuren 2 und 6. Das Zwischenrad (108) kämmt mit dem Schneckenwellenstirnrad (104) der oben im Grundkörper (51) gelagerten Schneckenwelle (103) des Winkelgetriebes (100). Das Stirnradgetriebe (120) hat eine Übersetzung ins Langsame von 1 : 4,8.

In Figur 2 ist vor der Nebenwelle (121) - als Alternative - eine drehspielbehaftete Nebenwelle (124) dargestellt. Diese Nebenwelle (124), die um 180° geschwenkt in Figur 3 vergrößert dargestellt ist, umfasst ein großes Nebenwellenrad (125), ein kleines Nebenwellenrad (127) und eine - hier nicht dargestellte - Achse, auf der das kleine Nebenwellenrad (127) gelagert ist. Das kleine Nebenwellenrad (127), es hat im Ausführungsbeispiel 10 Zähne, verfügt über einen angeformten Rohrzapfen (128), der zwei einander gegenüberliegende Mitnahmeflügel (129) aufweist. Die Bohrung des Rohrzapfens (128) setzt sich im kleinen Nebenwellenrad (127) fort und stellt dabei dessen Lagerbohrung dar. Auf der zwischen den Mitnahmeflügeln (129) gelegenen Außenwandung des Rohrzapfens (128) ist das große Nebenwellenrad (125) gelagert. Die Lagerbohrung des großen Nebenwellenrads (125) ist hierbei eine Ausnehmung, die zwei einander gegenüberliegende, im Querschnitt annähernd trapezförmige, Schwenkaussparungen (126) aufweist. Die Größe und Form der einzelnen Schwenkaussparung (126) ist so dimensioniert, dass ein einzelner Mitnahmeflügel (129) pro Schwenkaussparung (126) in einem Schwenkwinkel von 30 Winkelgraden frei, also ohne Mitnahme des großen Nebenwellenrades (125), hin und her geschwenkt werden kann.

Wird das in Figur 3 dargestellte große Nebenwellenrad (125) z.B. um 30 Winkelgrade - in einer Leerschwenkbewegung - entgegen der Uhrzeigerdrehrichtung um seine Rotationsachse geschwenkt, bleiben die im Getriebezug des Stirnradgetriebes (120) nachgeschalteten Zahnräder (108, 104) in Ruhe. Erst ab dieser Schwenkbewegung nehmen die Flanken der Schwenkaussparungen (126) die Mitnahmeflügel (129) und somit das kleine Nebenwellenrad (127) bei ihrer Rotationsbewegung mit.

Die Leerschwenkbewegung von z.B. 30 Winkelgraden erleichtert dem Elektromotor (81) das Beschleunigen, da dessen Anlaufwiderstand bei dieser Nebenwelle (124) zunächst minimal ist. Diese alternative spielbehaftete Nebenwelle (124) passt in den Bauraum der regulären Nebenwelle (121).

In Figur 10 ist die Schneckenwelle (103) des Winkelgetriebes (100), das hier ein Schneckengetriebe ist, im Längsschnitt in ihrer Einbaulage dargestellt. Die Schneckenwelle (103) ist eine beidseits wälzgelagerte Welle, die im mittleren Bereich als Schnecke (102) ausgebildet ist. An ihrem linken Ende trägt sie ein Schneckenwellenstirnrad (104), das mithilfe einer Anschlagplatte und einer Senkschraube drehstarr an der Schneckenwelle (103) befestigt ist. Zwischen dem Schneckenwellenstirnrad (104) und der Schnecke (102) ist als Radiallager ein im Grundkörper (51) eingepresstes, mit einem Außenring ausgestattetes Nadellager (111) eingebaut.

Zwischen der Schnecke (102) und dem rechten Wellenende, vgl. Figur 10, sitzen zwei axial z.B. mittels zweier Tellerfedern (113) vorgespannte Rillenkugellager (112). Dazu sind zwischen den Innenringen beider Rillenkugellager (112) zwei Stützhülsen (114) mit Abstand zueinander angeordnet. Jede Stützhülse (114) lagert zu dem zwischen den Stützhülsen (114) gelegenen Freiraum hin eine Tellerfeder (113). Beide Tellerfedern kontaktieren sich über ihre Außenkanten im Bereich des Freiraums. Der Außenring des neben der Schnecke (102) gelegenen Rillenkugellagers (112) stützt sich an einem Gehäusebund ab. Der Außenring des anderen Rillenkugellagers (112) wird im Grundkörper (51) über eine Ringschraube (115) axial einstellbar fixiert. Der Innenring des äußeren Rillenkugellagers (112) stützt sich axial an einer mittels einer Senkschraube befestigten Anschlagplatte ab.

Da beide Innenringe der Rillenkugellager (112) auf der Schneckenwelle (103) jeweils über einen Spielsitz gelagert sind und da zudem zwischen beiden Stützhülsen (114), bei ruhendem Getriebe, ein Abstand von 0,4 mm vorhanden ist, ermöglicht diese elastische Axiallagerung eine axiale Verschiebbarkeit der Schneckenwelle (103) innerhalb des Grundkörpers (51). Mit zunehmendem Verlagerungshub wird aufgrund der Wirkung der Tellerfedern (113) die Rückstellkraft größer.

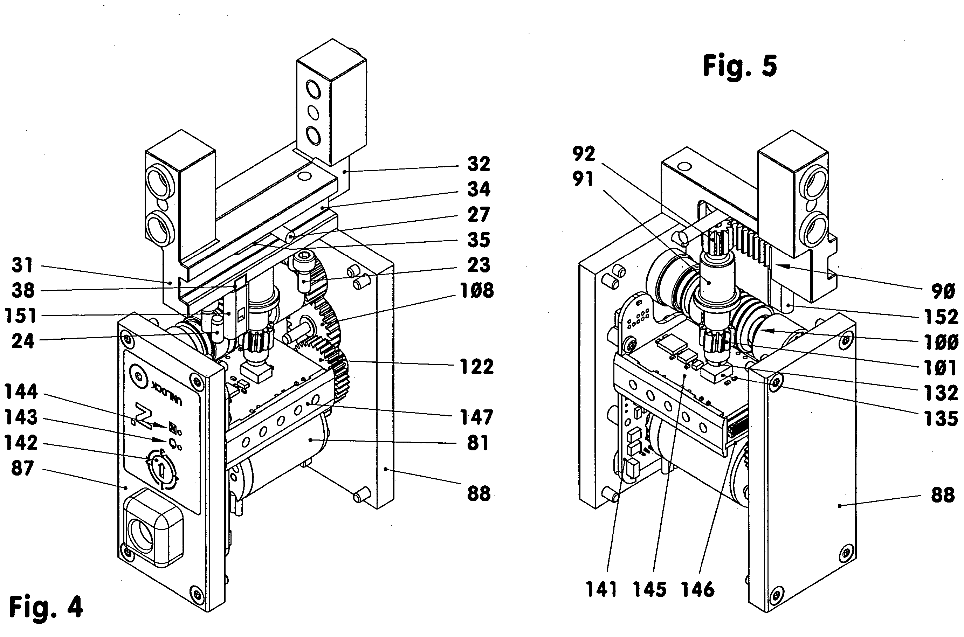

Die Schnecke (102) der Schneckenwelle (103) treibt die Synchronisierwelle (91) an, vgl. Figuren 4 und 5, die wiederum die Schlitten (31, 32) synchron über ein Zahnstangengetriebe (90) gegenläufig bewegt. Die Synchronisierwelle (91) sitzt dazu mit ihrer unteren Hälfte in der Stufensacklochbohrung (71) des Grundkörpers (51). An ihrem unteren Ende, vgl. Figur 7, trägt sie ein Schraubrad (101), das von der Schnecke (102) angetrieben wird. Die Übersetzung von der Schnecke (102) zum Schraubrad (101) beträgt 1:12 ins Langsame.

Im mittleren Bereich hat die Synchronisierwelle (91) einen Axiallagerflansch (93), mit dem sie in der Axiallagerzone (72) der Stufensacklochbohrung (71) axial gelagert ist. Am oberen Ende trägt die Synchronisierwelle (91) ein geradverzahntes Stirnrad (92). Zwischen dem Stirnrad (92) und dem Axiallagerflansch (93) ist die Synchronisierwelle (91) in der Durchgangsbohrung (14) des Führungskörpers (11) radial gleitgelagert.

Nach den Figuren 4 und 7 sind im Führungskörper (11) zwei über ihre Längsseite aneinanderliegende und relativ zueinander bewegliche Schlitten (31, 32) gelagert. Zwischen den Längsseiten der Schlitten befindet sich eine Arbeitsfuge.

Der einzelne Schlitten (31, 32) ist im Wesentlichen ein quaderförmiger Stahlkörper, der zum Beispiel aus dem Werkstoff 16MnCr5 hergestellt ist. Er hat die Abmessungen 53,8 mm * 12 mm * 10 mm. Über diese Abmessungen hinaus steht bei jedem Schlitten (31, 32) ein zum Beispiel 21,5 mm langer Schlittenarm (33) nach oben ab. An jedem Schlittenarm (33) ist ein Greifelement (1, 2) befestigt, vgl. Figur 2.

Die der Arbeitsfuge abgewandte Längsseite eines jeden Schlittens (31, 32) weist jeweils eine durchgehende Schlittenlängsnut (34) mit rechteckigem Querschnitt auf. Der Querschnitt der Schlittenlängsnut (34) misst z.B. 5 mm * 2,6 mm. Die Längsnut (34) besitzt im mittleren Bereich ein Langloch (35), das jeweils von einem, im Führungskörper (11) befestigten Haltestift (27) durchquert wird. Die Enden der Langlöcher (35) benutzen den Haltestift (27) als Führungsanschlag für die Schlitten (31, 32).

Die der Arbeitsfuge zugewandte Längsseite eines jeden Schlittens (31, 32) verfügt unterhalb des jeweiligen Langlochs (35) über eine in den Schlitten (31, 32) eingearbeitete Zahnstange (37). Jede dieser Zahnstangen (37) kämmt mit dem Synchronrad (92).

Im vorderen Deckel (87) ist eine beschriftete Blende (89) befestigt. Im unteren Bereich der Blende (89) befindet sich eine Bohrung, die sich auch im Deckel (87) fortsetzt. In dieser Bohrung sitzt ein Drehschalter (142) für z.B. vier Schwenkpositionen. Die Schwenkpositionen sind mit den Nummern 1 - 4 markiert und beschriftet. Jede Nummer steht für eine einstellbare Solldrehzahl des Elektromotors (81). Die Drehzahlen sind im Ausführungsbeispiel 11500, 10000, 8000 und 6000 U/min. Die höchste Drehzahleinstellung ist mit der Nummer 1 beschriftet.

Der Drehschalter (142) ist auf der auf der Rückseite des vorderen Deckels (87) befestigten Frontplatine (141) angeordnet. Letztere trägt neben dem Drehschalter (142) eine Stromversorgungs-LED (143), eine Fehlermeldungs-LED (144) und mehrere Stecker, u.a. für die Anbindung weitere Platinen (145, 146), den Anschluss des Motors (81) und den Anschluss eines durch die Kabelfixierung (170) verlegbaren Versorgungskabels.

Auf der Frontplatine (141) sind eine Auswerteplatine (145) und eine Motortreiberplatine (146) senkrecht aufgesteckt. Die dem Motor (81) nächstgelegene Motortreiberplatine (146) trägt die Motortreiber und die Schaltungen für die Drehzahl- und Stromregelkreise. Auf der Auswerteplatine (145) sind unter anderem der mehrere Hallsensoren aufweisende Magnetfeldsensor (135) und die CPU für die Motortreiber untergebracht.

Der hier verwendete Magnetfeldsensor (135) weist z.B. vier zueinander winkelversetzte einzelne Halleffektsensoren auf. Anstelle der vier Einzelsensoren können auch zwei, acht oder mehr verwendet werden. Nach den Figuren 6 und 7 befindet sich oberhalb des Magnetfeldsensors (135) im unteren freien Ende der Synchronisierwelle (91) ein z.B. eingeklebter Permanentmagnet (132). Der scheibenförmige Permanentmagnet (132), der eine Scheibenstärke von z.B. 2 mm und einen Durchmesser von 4 mm aufweist, ist mittig in Nord- und Südpol geteilt. Die Teilungsebene liegt hierbei in einer Ebene, in der auch die Mittellinie des scheibenförmigen Magneten (132) liegt. Der Permanentmagnet (132) ist z.B. 1 mm in der Stirnseite der Synchronisierwelle (91) versenkt. Sein Abstand gegenüber dem Magnetfeldsensor (135) beträgt im Ausführungsbeispiel 1,4 mm. Generell kann der Abstand zwischen 0,5 und 3 mm liegen.

Im Ausführungsbeispiel hat der Magnetfeldsensor (135) im Wesentlichen die gleiche Baugröße wie der Permanentmagnet (132), vgl. Figuren 6 und 7.

Sind im Magnetfeldsensor (135) zum Beispiel zwei rechtwinklig zueinander angeordnete Halleffektsensoren eingebaut, liefern die beiden Sensoren jeweils entgegengesetzte Hall-Spannungen. Aus diesen beiden Hall-Spannungen errechnet die Sensorelektronik den Verstellwinkel der Synchronisierwelle (91). Im vorliegenden Fall liefert bei vier Halleffektsensoren und einem nachgeschalteten 12-bit-A/D-Wandler eine volle Umdrehung eine Auflösung von 4096 Winkelteilen. Damit beträgt theoretisch die kleinste Greifelementhubspanne 4/1000 mm.

Im vorliegenden Ausführungsbeispiel dreht sich die Synchronisierwelle (91) für einen vollen Greifelementehub maximal um 360 Winkelgrade. Sollten bei einer Greifvorrichtung länge Hübe erforderlich sein und hierfür sich die Synchronisierwelle (91) um mehr als 360 Winkelgrade drehen müssen, ist für eine absolute Schlittenpositionsermittlung eine Elektronikerweiterung notwendig.

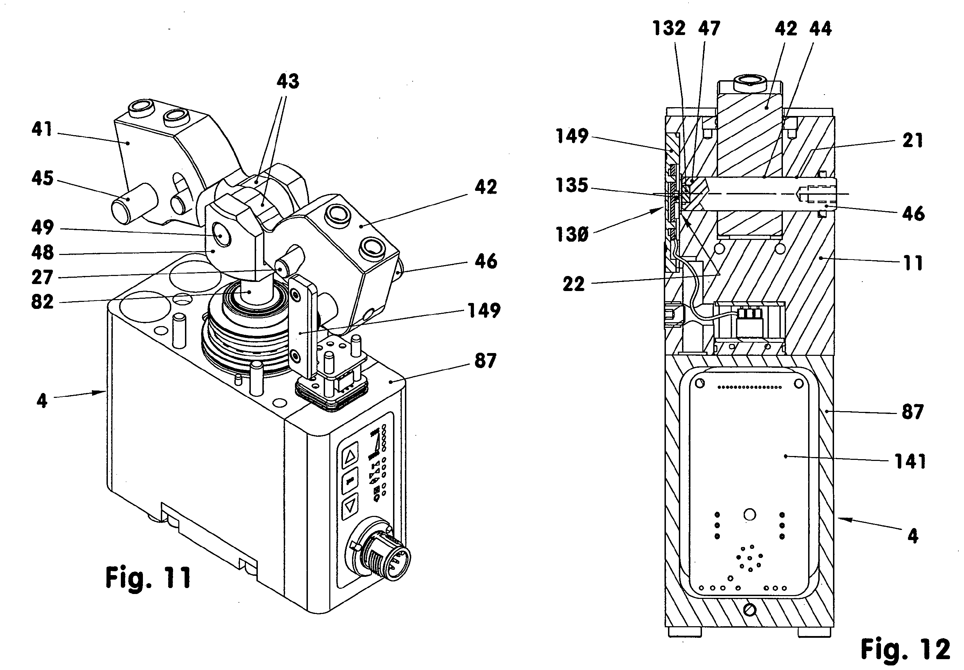

In den Figuren 11 und 12 wird eine Winkelgreifvorrichtung (4) mit zwei Greifelementeträgern (41, 42) dargestellt. Die Greifelementeträger (41, 42) sind im Führungskörper (11) des Gehäuses (10) auf Schwenkbolzen (45, 46) schwenkbar gelagert angeordnet. Sie werden von einem unterhalb der Greifelementeträger (41, 42) gelegenen - hier nicht dargestellten - Stellglied angetrieben. Im Ausführungsbeispiel ist das Stellglied z.B. ein Elektromotor, der über mindestens ein Getriebe eine Spindel (82) auf- oder abwärts bewegt. Die Spindel (82) wirkt über eine Gabel (48) auf die Greifelementeträger (41, 42). Alternativ kann das Stellglied auch eine Zylinder-Kolben-Einheit sein. Hier verschiebt dann die Kolbenstange die Gabel (48).

Die in Figur 11 dargestellten Greifelementeträger (41, 42) haben jeweils einen nahezu quaderförmigen Schwenkkörper, an dem - in Richtung Gehäusemitte - ein abstehender Kragarm (43) angeformt ist. In dem Kragarm (43) ist als Führungskulisse ein Langloch eingearbeitet. Das Langloch, hier nicht dargestellt, ist quer zur Mittellinie (8) der Greifvorrichtung orientiert. Im Bereich des Langlochs hat der einzelne Kragarm (43) die halbe Breite des Greifelementeträgers (41, 42). Die beiden nebeneinanderliegenden Kragarme (43) befinden sich in der Aussparung der auf der Spindel (82) angeordneten Gabel (48). Die beiden Gabelzinken sind über einen Querbolzen (49) miteinander verbunden, wobei der Querbolzen (49) die beiden Langlöcher der Kragarme (43) durchquert.

Jeder Greifelementeträger (41, 42) hat für seine gehäuseseitige Lagerung in dem dem Kragarm (43) abgewandten Bereich eine Bolzenhaltebohrung (44). Der einzelne Greifelementeträger (41, 42) ist über Letztere im Gehäuse (10) mittels des Schwenkbolzens (45, 46) gelagert. Jeder Schwenkbolzen (45, 46) ist im Greifelementeträger (41, 42) mithilfe eines Gewindestifts in der jeweiligen Bolzenhaltebohrung (44) kraft- und/oder formschlüssig festgeklemmt. Der so mit dem einzelnen Greifelementeträger (42) drehstarr verbundene Schwenkbolzen (46) des nach Figur 11 vorderen Greifelementeträgers (42) endet innerhalb des Gehäuses (10) vor einer zum Beispiel rechteckigen, von außen am Führungskörper (11) befestigten Sensorplatine (149). Auf der Sensorplatine (149) ist gegenüber dem Bauteilende (47) des Schwenkbolzens (46) ein Magnetfeldsensor (135) befestigt.

Das dem Magnetfeldsensor (135) zugewandte Ende des Schwenkbolzens (46) hat dazu eine kurze Sacklochbohrung, in der ein Permanentmagnet (132) eingeklebt ist, vgl. hierzu die Beschreibung zu dem aus Figur 7 bekannten Permanentmagnet (132). Im Spalt zwischen dem Permanentmagnet (132) und dem Magnetfeldsensor (135) befindet sich eine kleine Abdeckscheibe (22), die die Gehäusebohrung (21) verschließt, in der sich das magnettragende Ende des Schwenkbolzens (46) befindet. Auf diese Weise ist die Sensorplatine (149) vor gegebenenfalls austretendem Gleitlagerschmiermittel geschützt.

Die Sensorplatine (149) ist über eine Steckverbindung mit dem Grundkörper (51) verbunden. Dazu ist an ihr ein mit einem mehrpoligen Stecker konfektioniertes Kabel befestigt, vgl. Figur 12.

Kombinationen der verschiedenen Ausführungsbeispiele sind denkbar.

### Bezugszeichenliste:

- 1, 2: Greifelemente
- 3: Parallelgreifvorrichtung
- 4: Winkelgreifvorrichtung
- 5: Magnetsensor, extern
- 8: Mittellinie
- 9: Greifrichtung

- 10: Gehäuse
- 11: Führungskörper, Gehäuse
- 12: Doppelführungsnut
- 13: Führungsstollen
- 14: Durchgangsbohrung
- 15: Querbohrung
- 17: Messmittelnuten, Tragvorrichtung

- 21: Lagerung, Lagerbohrung für (41, 42)
- 22: Trennwand, Abdeckscheibe
- 23: Befestigungsschrauben
- 24: Passstifte
- 27: Haltestift für (31, 32) und (41, 42)
- 28, 29: Langlöcher

- 31, 32: Schlitten
- 33: Schlittenarme
- 34: Schlittenlängsnut
- 35: Langloch
- 37: Zahnstange
- 38, 39: Haltenuten für (151)
- 41, 42: Greifelementeträger
- 43: Kragarme
- 44: Bolzenhaltebohrung
- 45, 46: Schwenkbolzen, Achsen
- 47: Achsende, Bauteilende
- 48: Gabel
- 49: Querbolzen

- 51: Grundkörper, Gehäuse
- 52: Oberseite
- 54: Vorderseite, Stirnfläche
- 55: Rückseite

- 61: Hauptausnehmung
- 62: Stollen
- 63: Wellenlagerausnehmung
- 64: Antriebseinsenkung
- 65: Nebenwelleneinsenkung
- 66: Zwischenradeinsenkung

- 71: Stufensacklochbohrung
- 72: Axiallagerzone
- 73: Schneckenradzone
- 74: Radiallagerzone
- 75: Boden
- 77: Gewindedurchgangsbohrungen
- 78: Gewindebohrungen

- 80: Antriebsstrang
- 81: Antriebsmotor, Elektromotor, Stellglied
- 82: Spindel
- 83: Antriebsrad
- 87: Deckel, vorn, vorderseitig
- 88: Deckel, hinten, rückseitig
- 89: Blende

- 90: Getriebe, Zahnstangengetriebe Synchronisiergetriebe
- 91: Synchronisierwelle, Welle
- 92: Synchronrad, Stirnrad
- 93: Axiallagerflansch

- 97: Wellenende, Bauteilende

- 100: Winkelgetriebe, Schneckengetriebe
- 101: Schneckenrad, unecht; Schraubrad
- 102: Schnecke
- 103: Schneckenwelle
- 104: Schneckenwellenstirnrad
- 108: Zwischenrad

- 111: Nadellager
- 112: Rillenkugellager
- 113: Tellerfedern
- 114: Stützhülsen
- 115: Ringschraube
- 119: Deckelschrauben, Senkschrauben

- 120: Stirnradgetriebe
- 121: Nebenwelle
- 122: Nebenwellenrad, groß
- 123: Nebenwellenrad, klein
- 124: Nebenwelle, spielbehaftet
- 125: Nebenwellenrad, groß, spielbehaftet
- 126: Schwenkaussparungen
- 127: Nebenwellenrad, klein, mit Rohrzapfen
- 128: Rohrzapfen
- 129: Mitnahmeflügel

- 130: Weg- oder Winkelmesssystem
- 131: Magnetfelderzeuger
- 132: Permanentmagnet, Diametralmagnet

- 135: Magnetfeldsensor

- 141: Frontplatine an vorderem Deckel, elektronische Baugruppe
- 142: Drehschalter für Drehzahleinstellung
- 143: Stromversorgungs-LED
- 144: Fehlermeldungs-LED
- 145: Auswerteplatine, elektronische Baugruppe
- 146: Motortreiberplatine, elektronische Baugruppe
- 147: Gleitschiene
- 149: Sensorplatine, klein

- 151: Tragelement in (31)
- 152: Tragelement in (32)

- 170: Kabelhalterung, Zugentlastung

## Patentansprüche

1. Greifvorrichtung mit mindestens zwei, aufeinander zu- oder voneinander wegbewegbaren, auf Schlitten (31, 32) oder Greifelementeträgern (41, 42) angeordneten Greifelementen (1, 2), in deren Antriebsstrang (80) oder Lagerung (21) sich mindestens eine Welle (91) oder Achse (45, 46) befindet, deren Dreh- oder Schwenkbewegung mit der Bewegung der Greifelemente (1, 2) zwangsgekoppelt ist, wobei, im Gehäuse (10) der Greifvorrichtung eine Welle (91) oder Achse (45, 46) mit einem Bauteilende (47, 97) endet, das zur Drehwinkelerfassung entweder einen Magnetfelderzeuger (131, 132) oder einen Magnetfeldsensor (135) trägt, während im Gehäuse (10) gegenüber dem Bauteilende (47, 97) entweder ein Magnetfeldsensor (135) gegenüber einem bauteilendeseitigen Magnetfelderzeuger (131, 132) oder ein Magnetfelderzeuger (131, 132) gegenüber einem bauteilendeseitigen Magnetfeldsensor (135) angeordnet ist.

2. Greifvorrichtung nach Anspruch 1, **dadurch gekennzeichnet, dass** der Magnetfelderzeuger (131) aus mindestens einem Permanentmagnet (132) besteht.

3. Greifvorrichtung nach Anspruch 2, **dadurch gekennzeichnet, dass** der Permanentmagnet (132) eine zylindrische Scheibe ist, bei der die Trennung zwischen Süd- und Nordpol in der Ebene liegt, in der auch die Scheibenmittellinie liegt.

4. Greifvorrichtung nach Anspruch 1, **dadurch gekennzeichnet, dass** der Magnetfeldsensor (135) aus mindestens zwei Sensoren besteht, die den Halleffekt nutzen.

5. Greifvorrichtung nach Anspruch 1, **dadurch gekennzeichnet, dass** die Greifelemente (1, 2) tragenden Schlitten (31, 32), über ein Getriebe (37, 92) mittels einer Synchronisierwelle (91) synchronisiert zwangsgekoppelt sind und die Synchronisierwelle (91) mit einem Wellenende (97) endet, das zur Drehwinkelerfassung entweder einen Magnetfelderzeuger (131) oder einen Magnetfeldsensor (135) trägt.

6. Greifvorrichtung nach Anspruch 1, **dadurch gekennzeichnet, dass** die Greifelemente (1, 2) tragenden Greifelementeträger (41, 42) jeweils drehfest auf Achsen (45, 46) gelagert sind, wobei mindestens eine Achse (46) im Gehäuse (10) mit einem Bauteilende (47) endet, das zur Drehwinkelerfassung entweder einen Magnetfelderzeuger (131) oder einen Magnetfeldsensor (135) trägt.

7. Greifvorrichtung nach Anspruch 1, **dadurch gekennzeichnet, dass** im Gehäuse (10) zwischen dem Magnetfelderzeuger (131) und dem Magnetfeldsensor (135) eine mehrere zehntel Millimeter dicke Trennwand (22) aus einem Buntmetall oder Kunststoff angeordnet ist.

8. Greifvorrichtung nach Anspruch 1, **dadurch gekennzeichnet, dass** Magnetfelderzeuger (131) eine elektrische Spule ist.

9. Greifvorrichtung nach Anspruch 1, **dadurch gekennzeichnet, dass** zwischen der Synchronisierwelle (91) und dem Antriebsmotor (81) der Greifvorrichtung mindestens ein weiteres Getriebe angeordnet ist, das die Rotationsbewegung des Antriebsmotors (81) spielfrei, spielbehaftet oder elastisch auf das synchronisierende Getriebe (37, 92) überträgt.

10. Greifvorrichtung nach Anspruch 1, **dadurch gekennzeichnet, dass** die Schneckenwelle (103) des Winkelgetriebes (100) in Richtung ihrer Längsausdehnung axial elastisch gelagert ist.

## Claims

1. A gripping device having at least two gripping elements (1, 2), which can be moved towards or away from one another and are arranged on carriages (31, 32) or gripping-element supports (41, 42), in the drivetrain (80) or mounting (21) of which gripping elements at least one shaft (91) or spindle (45, 46) is located, the rotational or pivot movement of which is permanently coupled with the movement of the gripping elements (1, 2), wherein a shaft (91) or spindle (45, 46) ends in the housing (10) of the gripping device with a component end (47, 97), which carries either a magnetic field generator (131, 132) or a magnetic field sensor (135) for detection of the angle of rotation, whilst in the housing (10) opposite the component end (47, 97) either a magnetic field sensor (135) is arranged opposite a component-end-side magnetic field generator (131, 132) or a magnetic field generator (131, 132) is arranged opposite a component-end-side magnetic field sensor (135).

2. The gripping device according to Claim 1, **characterized in that** the magnetic field generator (131) consists of at least one permanent magnet (132).

3. The gripping device according to Claim 2, **characterized in that** the permanent magnet (132) is a cylindrical disc, in which the separation between south and north pole lies in the plane in which the disc centre line also lies.

4. The gripping device according to Claim 1, **characterized in that** the magnetic field sensor (135) consists of at least two sensors, which use the Hall effect.

5. The gripping device according to Claim 1, **characterized in that** the carriages (31, 32) carrying the gripping elements (1, 2) are permanently coupled in a synchronized manner via a gearbox (37, 92) by means of a synchronizing shaft (91) and the synchronizing shaft (91) ends with a shaft end (97), which carries either a magnetic field generator (131) or a magnetic field sensor (135) for detection of the angle of rotation.

6. The gripping device according to Claim 1, **characterized in that** the gripping-element supports (41, 42) carrying the gripping elements (1, 2) are mounted in a rotationally fixed manner on spindles (45, 46) in each case, wherein at least one spindle (46) ends in the housing (10) with a component end (47), which carries either a magnetic field generator (131) or a magnetic field sensor (135) for detection of the angle of rotation.

7. The gripping device according to Claim 1, **characterized in that** a dividing wall (22) several tenths of a millimetre thick and made from a non-ferrous metal or plastic is arranged in the housing (10) between the magnetic field generator (131) and the magnetic field sensor (135).

8. The gripping device according to Claim 1, **characterized in that** the magnetic field generator (131) is an electrical coil.

9. The gripping device according to Claim 1, **characterized in that** at least one further gearbox is arranged between the synchronizing shaft (91) and the drive motor (81) of the gripping device, which gearbox transmits the rotational movement of the drive motor (81) to the synchronizing gearbox (37, 92) in a manner free from play, subject to play or elastically.

10. The gripping device according to Claim 1, **characterized in that** the worm shaft (103) of the angular gear (100) is axially elastically mounted in the direction of the longitudinal extent thereof.

## Revendications

1. Dispositif de préhension avec au moins deux éléments de préhension (1, 2) pouvant être déplacés l'un vers l'autre ou écartés l'un de l'autre, disposés sur des glissières (31, 32) ou des supports d'élément de préhension (41, 42), dans le groupe de propulsion (80) ou logement (21) duquel se trouve au moins un arbre (91) ou un axe (45, 46), dont le mouvement de rotation ou de pivotement est couplé par force au mouvement des éléments de préhension (1, 2), sachant que dans le boîtier (10) du dispositif de préhension, un arbre (91) ou un axe (45, 46) se termine par un embout de composant (47, 97), qui porte soit un générateur de champ magnétique (131, 132) soit un capteur de champ magnétique (135) pour la saisie de l'angle de rotation, alors que dans le boîtier (10) en face de l'embout de composant (47, 97) est disposé soit un capteur de champ magnétique (135) opposé à un générateur de champ magnétique (131, 132) du côté embout de composant soit un générateur de champ magnétique (131, 132) opposé à un capteur de champ magnétique (135) du côté embout de composant.

2. Dispositif de préhension selon la revendication 1, **caractérisé en ce que** le générateur de champ magnétique (131) est composé d'au moins un aimant permanent (132).

3. Dispositif de préhension selon la revendication 2, **caractérisé en ce que** l'aimant permanent (132) est un disque cylindrique, pour lequel la séparation se situe entre le pôle sud et le pôle nord dans le plan dans lequel se trouve également la ligne médiane du disque.

4. Dispositif de préhension selon la revendication 1, **caractérisé en ce que** le capteur de champ magnétique (135) est composé d'au moins deux capteurs, qui utilisent l'effet Hall.

5. Dispositif de préhension selon la revendication 1, **caractérisé en ce que** les glissières (31, 32) portant les éléments de préhension (1, 2) sont couplées par force de façon synchronisée par le biais d'un mécanisme (37, 92) au moyen d'un arbre de synchronisation (91) et l'arbre de synchronisation (91) se termine par un embout d'arbre (97), qui porte soit un générateur de champ magnétique (131) soit un capteur de champ magnétique (135) pour la saisie de l'angle de rotation.

6. Dispositif de préhension selon la revendication 1, **caractérisé en ce que** les supports d'élément de préhension (41, 42) portant les éléments de préhension (1, 2) sont logés respectivement solidaires en rotation sur les axes (45, 46), sachant qu'au moins un axe (46) se termine dans le boîtier (10) par une extrémité de composant (47), qui porte soit un générateur de champ magnétique (131) soit un capteur de champ magnétique (135) pour la saisie de l'angle de rotation.

7. Dispositif de préhension selon la revendication 1, **caractérisé en ce qu'**une paroi de séparation (22) d'une épaisseur de plusieurs dizaines de millimètres dans un métal non ferreux ou en matière plastique est disposée dans le boîtier (10) entre le générateur de champ magnétique (131) et le capteur de champ magnétique (135).

8. Dispositif de préhension selon la revendication 1, **caractérisé en ce que** le générateur de champ magnétique (131) est une bobine électrique.

9. Dispositif de préhension selon la revendication 1, **caractérisé en ce qu'**au moins un autre mécanisme est disposé entre l'arbre de synchronisation (91) et le moteur d'entraînement (81) du dispositif de préhension, qui transmet le mouvement de rotation du moteur d'entraînement (81) sans jeu, avec jeu ou de façon élastique au mécanisme de synchronisation (37, 92).

10. Dispositif de préhension selon la revendication 1, **caractérisé en ce que** l'arbre de vis sans fin (103) du renvoi d'angle (100) est logé de façon axialement élastique en direction de son extension longitudinale.
